(19) Europäisches Patentamt
European Patent Office
Office européen des brevets

(11) **EP 4 379 426 A1**

(12) **EUROPEAN PATENT APPLICATION**
published in accordance with Art. 153(4) EPC

(43) Date of publication:
**05.06.2024 Bulletin 2024/23**

(21) Application number: **22849167.6**

(22) Date of filing: **01.07.2022**

(51) International Patent Classification (IPC):
*G01T 1/00* (2006.01)   *C09K 11/00* (2006.01)
*C09K 11/08* (2006.01)   *C09K 11/61* (2006.01)
*G01T 1/20* (2006.01)   *G02B 6/00* (2006.01)

(52) Cooperative Patent Classification (CPC):
**C09K 11/00; C09K 11/08; C09K 11/61; G01T 1/00;
G01T 1/20; G02B 6/00**

(86) International application number:
**PCT/JP2022/026525**

(87) International publication number:
**WO 2023/008101 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021 JP 2021122335
21.02.2022 JP 2022024806**

(71) Applicants:
• **Tohoku University**
**Sendai-shi, Miyagi 980-8577 (JP)**
• **C & A Corporation**
**Sendai-shi, Miyagi 980-0811 (JP)**

(72) Inventors:
• **YOSHIKAWA Akira**
**Sendai-shi, Miyagi 980-8577 (JP)**
• **KAMADA Kei**
**Sendai-shi, Miyagi 980-8577 (JP)**
• **YAJIMA Ryuga**
**Sendai-shi, Miyagi 980-8577 (JP)**
• **MIRAKAMI Rikito**
**Sendai-shi, Miyagi 980-8577 (JP)**
• **SHOJI Yasuhiro**
**Sendai-shi, Miyagi 980-0811 (JP)**

(74) Representative: **Samson & Partner Patentanwälte
mbB
Widenmayerstraße 6
80538 München (DE)**

(54) **OPTICAL FIBER EMITTER, EMITTER ARRAY, RADIATION MEASUREMENT DEVICE, AND OPTICAL FIBER EMITTER PRODUCTION METHOD**

(57)     A core material (102) is contained in a cylindrical container (101) (first step). The container (101) is formed from a thermoplastic cladding material. The container (101) can be formed from a heat resistant glass such as a borosilicate glass, for example. The core material (102) is a halide having a lower melting point than the cladding material. Next, the container (101) containing the core material (102) is heated using a heater (151) and stretched, thereby forming an optical fiber emitter (105) comprising a core (103) formed from a halide crystal, and a cladding (104) formed from the cladding material.

**FIG.1B**

EP 4 379 426 A1

**Description**

Technical Field

The present invention relates to an optical fiber light emitter having a core constituted by a light emitter, a light emitter bundle, and a radiation measuring device.

Background Art

Optical fiber light emitters whose core is a scintillator (light emitter), used for radiation measurement of radiation such as γ rays, X rays, α rays, and neutron rays are, for example, used as sensor devices for measuring radiation. For example, an optical fiber light emitter constituted by plastics has been proposed (Patent Literature 1).

Meanwhile, a eutectic scintillator constituted by a plurality of crystalline phases has been reported, and it is known that a scintillator with excellent resolution can be obtained by forming a scintillator having a high refractive index into a fiber-like structure, and forming an optical waveguide type eutectic structure in which the surroundings are covered with a matrix phase having a low refractive index (see Patent Literature 2). Therefore, by using a plurality of cores including a scintillator in the same fiber body to form a multi-core fiber, it is possible to achieve a sensor having a positional resolution capability with respect to radiation, for example.

Citation List

Patent Literature

Patent Literature 1: JP 6868643 B1
Patent Literature 2: JP 6468820 B1

Summary of Invention

Technical Problem

Now, halide crystals are known as materials that allow to obtain strong scintillation light. However, since halide crystals have deliquescent properties, there are problems in that it is not easy to carry out, for example, processing in the atmosphere and therefore it is not easy to manufacture an optical fiber emitter whose core is made of a crystal of a halide.

The present invention has been made to solve the above problems, and aims to make it possible to more easily manufacture an optical fiber emitter whose core is made of a crystal of a halide.

Solution to Problem

In accordance with a method for manufacturing an optical fiber light emitter according to the present invention, the method includes the steps of: a first step of accommodating a core material constituted by a halide having a melting point lower than that of the cladding material in a cylindrical container constituted by a thermoplastic cladding material; and a second step of forming an optical fiber light emitter comprising a core constituted by a crystal of the halide, and a cladding constituted by the cladding material, by heating the container accommodating the core material and stretching the container, wherein the crystal of the halide emits light by being irradiated with radiation.

In accordance with a method for manufacturing an optical fiber light emitter according to the present invention, the method includes the steps of: a first step of preparing a cylindrical cladding; a second step of forming a melt by melting a halide having a melting point lower than that of a material constituting the cladding; a third step of accommodating the melt in the cladding; and a fourth step of forming an optical fiber emitter whose core is made of a crystal of the halide by cooling and solidifying the melt accommodated in the cladding to form the crystal of the halide, wherein the crystal of the halide emits light by being irradiated with radiation.

In one configuration example of the above-described method for manufacturing an optical fiber emitter, in the third step, the melt is accommodated in the cladding by being sucked up into the inside of the cladding.

In one configuration example of the method for manufacturing the optical fiber emitter, in the third step, the melt is accommodated in the cladding by being pushed up into the inside of the cladding.

In one configuration example of the above-described method for manufacturing an optical fiber emitter, in the first step, a cladding array in which a plurality of claddings are bundled is provided, and in the third step, the melt is accommodated in each of the claddings of the cladding array.

In accordance with a method for manufacturing an optical fiber light emitter according to the present invention, the method includes the steps of: a first step of accommodating in a cylindrical cladding a core material constituted by a halide having a melting point lower than that of a material constituting the cladding; a second step of melting the core material accommodated in the cladding; and a third step of forming an optical fiber light emitter whose core is made of a crystal of the halide by cooling and solidifying the molten core material to form the crystal of the halide, wherein the crystal of the halide emits light by being irradiated with radiation.

The optical fiber light emitter according to the present invention comprises: a core constituted by a halide crystal that emits light; and a cladding constituted by a thermoplastic material.

The optical fiber light emitter according to the present invention comprises: a core constituted by a scintillator; and a cladding, wherein the core and the cladding have a thermal expansion coefficient difference of a value $60 \times 10^{-6}$/K or less and a thermal conductivity difference of a value 30 W/m/K or less.

In one configuration example of the optical fiber emitter, the optical fiber emitter is formed of a multi-core fiber having a plurality of the cores in the same fiber body.

In one configuration example of the optical fiber emitter, diameter of the core, thickness of the cladding, and the outer diameter of the cladding get smaller as approaching from one end side to the other end side.

In one configuration example of the optical fiber emitter, the core is rectangular in a cross-sectional view and arranged in a rectangular manner in the cross-sectional direction.

The optical fiber light emitter according to the present invention comprises: a core constituted by a eutectic having two crystalline phases; and a cladding, wherein at least one of the crystalline phases emits light by being irradiated with radiation.

In one configuration example of the optical fiber emitter, average crystal grain size of the two crystalline phases is 30 μm or less.

In one configuration example of the optical fiber emitter, refractive index difference between the two crystalline phases is 0.1 or less at an emitting wavelength.

In one configuration example of the optical fiber emitter, average crystal grain size of the two crystalline phases is 30 μm or less.

In one configuration example of the optical fiber emitter, the core is constituted by an oxide crystal or a halide crystal that emits light by being irradiated with radiation.

The radiation measuring device according to the present invention comprises the above-described optical fiber light emitter.

In the light emitter bundle according to the present invention, a plurality of the above-described optical fiber emitters are bundled.

The radiation measuring device according to the present invention comprises the above-described light emitter bundle.

A radiation measuring device according to the present invention comprises: an optical fiber light emitter including a core constituted by a scintillator that emits light by being irradiated with radiation, and a cladding; a first sensor for detecting light reaching one end side of the optical fiber emitter; a second sensor for detecting light reaching the other end side of the optical fiber emitter; and a calculation circuit for obtaining an incident position of radiation in the optical fiber emitter by at least one of a difference in light detection time and a difference in the detected amount of light, between the first sensor and the second sensor.

In one configuration example of the radiation measuring device, the optical fiber light emitter is formed in a coil shape.

Advantageous Effects of Invention

As described above, the present invention involves accommodating, in a cylindrical container constituted by a thermoplastic material, a halide having a melting point lower than that of the thermoplastic material, and heating and stretching the resultant, and therefore an optical fiber light emitter whose core is made of a crystal of a halide can be manufactured more easily.

Brief Description of Drawings

FIG. 1A depicts a diagram showing an intermediate step of a method for manufacturing an optical fiber emitter according to Embodiment 1 of the present invention.

FIG. 1B depicts a diagram showing an intermediate step of a method for manufacturing an optical fiber emitter according to Embodiment 1 of the present invention.

FIG. 2 depicts a perspective view showing a configuration of an optical fiber emitter according to Embodiment 1 of the present invention.

FIG. 3 depicts a perspective view showing a configuration of another optical fiber emitter according to Embodiment 1 of the present invention.

FIG. 4A depicts a diagram showing an intermediate step of a method for manufacturing another optical fiber emitter according to Embodiment 1 of the present invention.

FIG. 4B depicts a diagram showing an intermediate step of a method for manufacturing another optical fiber emitter according to Embodiment 1 of the present invention.

FIG. 5 depicts a diagram showing an intermediate step of a method for manufacturing another optical fiber emitter according to Embodiment 1 of the present invention.

FIG. 6 depicts a flowchart illustrating a method for manufacturing an optical fiber emitter according to Embodiment 2 of the present invention.

FIG. 7A depicts a perspective view showing a configuration of a cladding array 200 in an intermediate step, illustrating another method for manufacturing an optical fiber emitter according to Embodiment 2 of the present invention.

FIG. 7B depicts a perspective view showing a configuration of the cladding array 200 in an intermediate step, illustrating another method for manufacturing an optical fiber emitter according to Embodiment 2 of the present invention.

FIG. 8 depicts a flowchart illustrating a method for manufacturing an optical fiber emitter according to Embodiment 3 of the present invention.

FIG. 9 depicts a perspective view showing a configuration of the optical fiber light emitter 300 according to Embodiment 4 of the present invention.

FIG. 10 depicts a perspective view showing a configuration of the optical fiber emitter 300a according to Embodiment 4 of the present invention.

FIG. 11 depicts a perspective view showing a configuration of the optical fiber light emitter 300b according to Embodiment 4 of the present invention.

FIG. 12 depicts a cross-sectional view showing a configuration of the optical fiber light emitter 300c according to Embodiment 4 of the present invention.

FIG. 13 depicts a photograph taken of a situation where scintillator light generated in the optical fiber emitter actually manufactured is guided.

FIG. 14 depicts a photograph showing the result of observing, with an electron microscope, a core of an end face of the optical fiber emitter actually manufactured.

FIG. 15 depicts a diagram showing a configuration of a radiation measuring device according to an embodiment of the present invention.

Description of Embodiments

Hereinafter, a method for manufacturing an optical fiber light emitter according to Embodiment 1 of the present invention will be described.

Embodiment 1

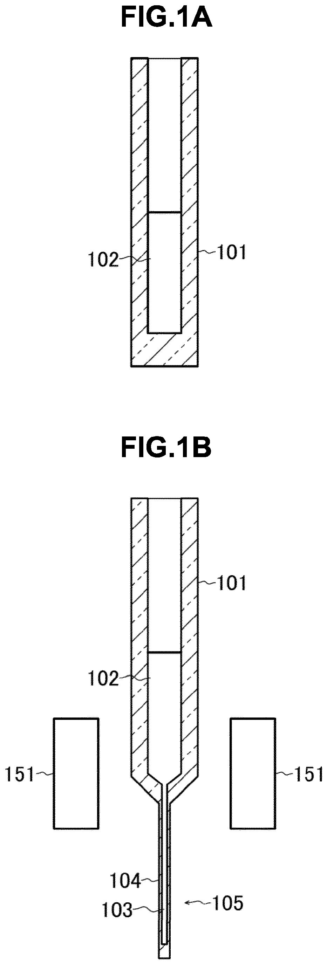

Hereinafter, a method for manufacturing an optical fiber light emitter according to Embodiment 1 of the present invention will be described with reference to FIGS. 1A and 1B.

First, as shown in FIG. 1A, the core material 102 is accommodated in the cylindrical container 101 (first step). The container 101 is constituted by a thermoplastic cladding material. The container 101 can be constituted by, for example, heat-resistant glass such as borosilicate glass. The core material 102 is a halide having a melting point lower than that of the cladding material. The core material 102 can be a material for obtaining crystals of a halide such as Tl:CsI, Eu:SrI$_2$, CeBr$_3$, Ce:LaBr$_3$, Ce:LaCl$_3$, and CaI$_2$. Since this kind of material is deliquescent, it is important that the accommodation (filling) of the core material 102 in the container 101 is carried out in an environment where there is no moisture (where the humidity is controlled). For example, accommodation of the core material 102 into the container 101 can be carried out in an argon atmosphere having a humidity of 0.

Next, as shown in FIG. 1B, the container 101 accommodating the core material 102 is heated with a heater 151 and stretched. As a result, the core material 102 accommodated in the container 101 is melted and crystallized to form an optical fiber light emitter 105 including a core 103 constituted by a crystal of a halide and a cladding 104 constituted by a cladding material (second step). The crystal of the halide emits light by being irradiated with radiation. The crystal of the halide has a higher refractive index than that of the cladding material. The crystal of the halide is, for example, a crystal of Tl:CsI, Eu:SrI$_2$, CeBr$_3$, Ce:LaBr$_3$, Ce:LaCl$_3$, or CaI$_2$.

It is also important to carry out the above-described step of stretching the container 101 accommodating the core material 102 by heating in an environment free of moisture. For example, the stretching described above can be carried out in an argon atmosphere having a humidity of 0. Moreover, upon the above-described accommodation of the core material 102 into the container 101, the stretching described above can be carried out in the atmosphere if the container 101 is sealed after accommodating the core material 102 in the container 101 so that the accommodated core material 102 does not come into contact with the outside air.

Since the cladding material constituting the container 101 has a melting point higher than that of the core material 102, it is possible to soften and stretch the container 101 by heating, and melt and crystallize the core material 102. At the time when the core material 102 is melted and crystallized to form the core 103, the core 103 is surrounded by the cladding 104, and therefore the core 103 does not come into contact with the surrounding atmosphere, and problems such as deliquescence do not occur. As a matter of course, the core material 102 can be easily accommodated in the container 101 in an atmosphere having a humidity of 0. As described above, in accordance with Embodiment 1, an optical fiber light emitter 105 whose core is made of a crystal of a halide can be manufactured extremely easily.

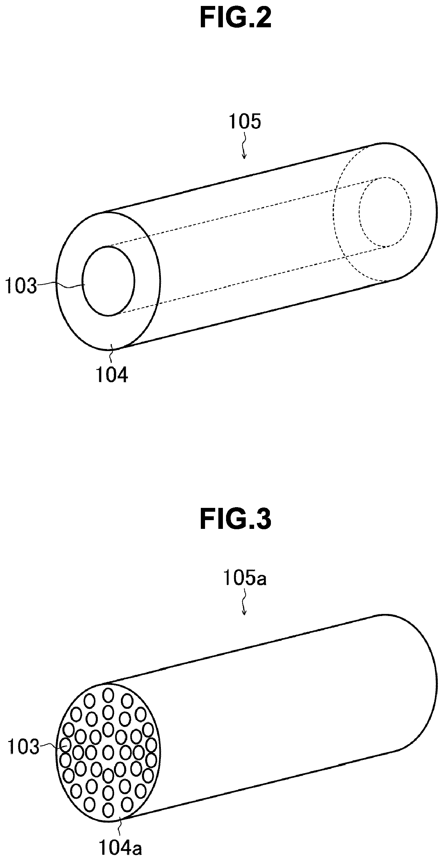

As shown in FIG. 2, it is possible to obtain an optical fiber light emitter 105 including a core 103 constituted a halide crystal that emits light, and a cladding 104 constituted by a thermoplastic material, by the manufacturing method of Embodiment 1 described above. The cladding 104 is constituted by, for example, glass. The core constituted by this kind of halide crystal has a refractive index n of about 1.8, and a critical angle not less than that of a common optical fiber can be achieved between the core and the cladding 104 constituted by glass having a refractive index n = 1.46 to 1.5. As shown in FIG. 3, the optical fiber emitter 105a may be a multi-core fiber having a plurality of cores 103 in the same fiber body. It may be a bundle of light emitters in which a plurality of optical fiber light emitters 105 are bundled.

For example, the optical fiber light emitter can be used as a radiation measuring device by using the optical fiber light emitter 105 (optical fiber light emitter 105a) according to Embodiment 1 as a sensor device, and combining the optical fiber light emitter 105 with a light receiving device capable of receiving scintillation light emitted in the core 103 and being guided by the optical fiber light emitter 105. The above-described radiation measuring device may be configured by using the above-described light emitter bundle as a sensor device.

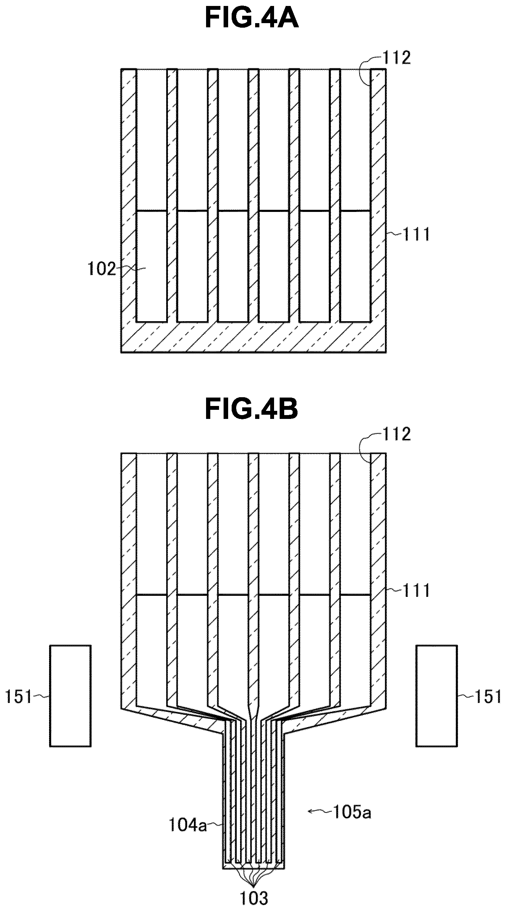

In the case of configuring a multi-core fiber, the manufacture may be carried out as shown in the following. For example, first, as shown in FIG. 4A, a container 111 having a plurality of cylindrical accommodating portions 112 is provided, and the core material 102 is accommodated in each accommodating portion 112 (first step). The container 111 is constituted by a thermoplastic cladding material. For example, the container 111 may be constituted by heat-resistant glass such as borosilicate glass.

Next, as shown in FIG. 4B, the container 111 accommodating the core material 102 in each accommodating portion 112 is heated with a heater 151 and stretched. As a result, the core material 102 accommodated in each accommodating portion 112 is melted and crystallized to form an optical fiber light emitter 105a including a plurality of cores 103 constituted by a crystal of a halide, and a cladding 104a constituted by a cladding material (second step). The optical fiber emitter 105a is configured to be a multi-core fiber.

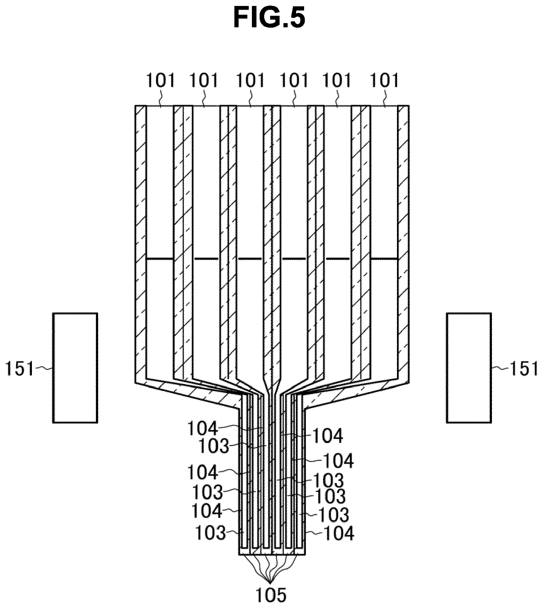

As shown in FIG. 5, by bundling a plurality of containers 101, heating them with a heater 151, and stretching them, the optical fiber light emitter 105 including the core 103 and the cladding 104 can be formed in a bundle in which a plurality of the optical fiber light emitters 105 are bundled.

Next, a description will be given in detail with reference to the examples. First, heat-resistant glass container having a cylindrically-shape having a length of 200 mm, an outer diameter of 25 mm, and an inner diameter of 20 mm was provided. The heat-resistant glass has a softening point of 820°C. Next, in an argon atmosphere having a humidity of 0, a powder of thallium iodide [TlI] and a powder of cesium iodide [CsI], each having a predetermined amount, were mixed to form a mixed powder, and the mixed powder was accommodated inside (filled in) the container. The mixed powder obtained by mixing the powder of TlI and the powder of CsI was dissolved by heating to form a melt, and by appropriately cooling the melt, a thallium-activated cesium iodide [ThCsI] crystal (melting point 621°C) was obtained.

Then, the upper part of the container filled with the raw material (mixed powder) was fixed, the lower part of the container was heated to 820°C, and while being heated, the bottom of the container was pulled downward. This process was also carried out in an argon atmosphere having a humidity of 0. The speed of the downward pull was 1 km/h. Meanwhile, the optical fiber light emitter manufactured by the downward pull was wound by a winding device. The optical fiber emitter was manufactured to have an outer diameter of 100 μm and a length of 10 m. The manufactured optical fiber emitter had an inner diameter of the cladding of 80 μm, in which a core was formed by Tl:CsI crystals. The outer shape of the formed core was 80 μm.

The core of the manufactured optical fiber emitter exhibited emission of light of 550 nm by radiation excitation or optical excitation, and it was confirmed that light is guided onto the end of the optical fiber emitter. 250,000 pieces of the manufactured optical fiber light emitters were bundled together using an adhesive to form a 5 cm square light emitter bundle, and the bundle was cut to have 2 mm thickness. The obtained light emitter bundle showed a positional resolution of 120 μm with respect to X-rays.

As described above, in accordance with Embodiment 1, a tubular container constituted by a thermoplastic material accommodates a halide having a melting point lower than the thermoplastic material, and the resultant is heated and stretched. Therefore, it becomes easier to manufacture an optical fiber light emitter whose core is made of a crystal of a halide. It is possible to achieve a radiation measuring device having an ultra-high resolution by using the optical fiber emitter.

Embodiment 2

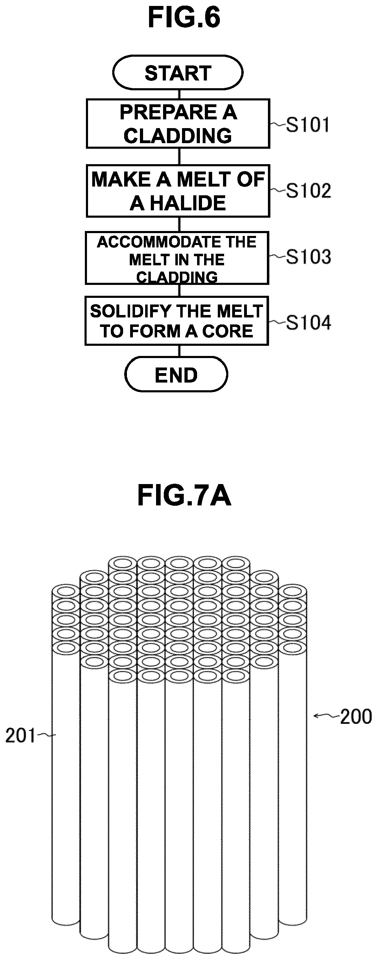

Next, a method for manufacturing an optical fiber light emitter according to Embodiment 2 of the present invention will be described with reference to FIG. 6.

First, in the first step S101, a cylindrical cladding is provided. The cladding may be constituted by heat-resistant glass such as borosilicate glass. Next, in the second step S102, a halide having a melting point lower than that of the material constituting the cladding is melted to form a melt. For example, a melt of the above-described halide is provided and accommodated in a particular container (such as a crucible). For example, the halide may be, for example, $Tl:CsI$, $Eu:SrI_2$, $CeBr_3$, $Ce:LaBr_3$, $Ce:LaCl_3$, $CaI_2$, or $BaCl_2$. Since this kind of material is deliquescent, it is important to carry out the preparation of the melt described above in an environment where there is no moisture (where humidity is controlled).

Next, in the third step S103, the melt is accommodated (filled) in the cladding. For example, the melt can be accommodated in the cladding by sucking up the melt to the inside of the cladding via an opening on one end side of the cladding. For example, the melt can be sucked up to the inside of the cladding by immersing one end side of the cladding into the melt accommodated in the container described above and exhausting the air inside the cladding from the other end side of the cladding. Meanwhile, the melt can be accommodated in the cladding by pushing up the melt into the inside of the cladding from the opening on one end side of the cladding. For example, the melt can be pushed up into the inside of the cladding by applying, in a situation where one end side of the cladding is immersed in the melt accommodated in the container described above, a higher pressure than the other end side of the cladding, to the liquid surface of the melt.

Next, in the fourth step S104, the melt accommodated in the cladding is cooled and solidified to form a crystal of a halide, thereby forming an optical fiber light emitter having a crystal of a halide as the core. The crystal of the halide emits light by being irradiated with radiation. The crystal of the halide has a higher refractive index than that of the material constituting the cladding. The crystal of the halide is, for example, a crystal of $Tl:CsI$, $Eu: SrI_2$, $CeBr_3$, $Ce:LaBr_3$, $Ce:LaCl_3$, $CaI_2$, or $BaCl_2$. After accommodating the melt of the halide in the cladding, the above-described solidification can be carried out in the atmosphere if the cladding is sealed so that the accommodated melt does not come into contact with the outside air.

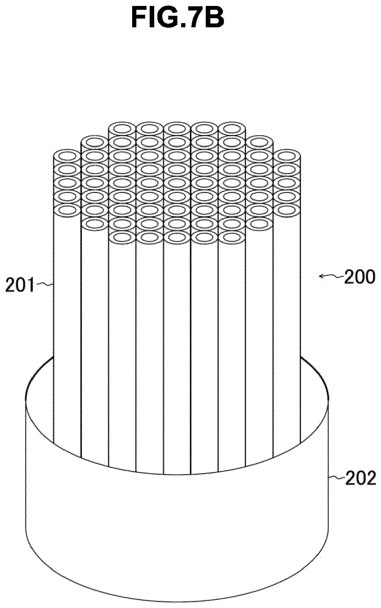

In the first step, as shown in FIG. 7A, a cladding array 200 in which a plurality of claddings 201 are bundled can be provided (first step). In this case, the melt is accommodated in each cladding 201 of the cladding array 200 (third step). For example, as shown in FIG. 7B, by immersing one end side of the provided cladding array 200 into the container 202 accommodating the melt of the halide and sucking up the melt to the inside of each cladding 201, the melt can be accommodated in each cladding 201 of the cladding array 200. Moreover, the melt can be accommodated in each cladding 201 of the cladding array 200 by immersing one end side of the provided cladding array 200 into the container 202 accommodating the melt of the halide and pushing up the melt into the inside of each cladding 201.

After the molten halide is accommodated in the cladding, it is surrounded by the cladding, and therefore it does not come into contact with the surrounding atmosphere, and problems such as deliquescence do not occur. As a matter of course, the melting of the halide in an atmosphere having a humidity of 0 can be easily carried out. As described above, in accordance with Embodiment 2, an optical fiber light emitter having a core constituted by a crystal of a halide can be manufactured extremely easily.

Embodiment 3

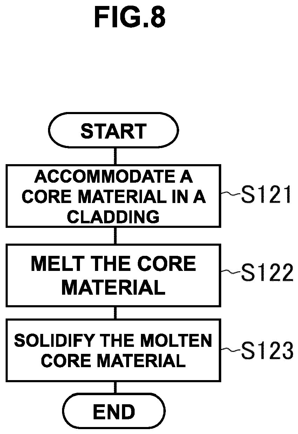

Next, a method for manufacturing an optical fiber light emitter according to Embodiment 3 of the present invention will be described with reference to FIG. 8.

First, in the first step S121, a core material constituted by a halide having a melting point lower than that of the material constituting the cladding is accommodated in the cylindrical cladding. The cladding can be constituted by heat-resistant glass such as borosilicate glass. The core material is a halide having a melting point lower than that of the cladding material. The core material may be a material for obtaining crystals of halide such as $Tl:CsI$, $Eu:SrI_2$, $CeBr_3$, $Ce:LaBr_3$, $Ce:LaCl_3$, $CaI_2$, or $BaCl_2$. Since this type of material is deliquescent, it is important that the core material is accommodated (filled) in the cladding in a moisture-free (humidity-controlled) environment. For example, the accommodation of the core material in the cladding can be carried out in an argon atmosphere having a humidity of 0.

Next, in the second step S122, the core material accommodated in the cladding is melted. For example, the core material can be melted by heating the cladding accommodating the core material with a heater to a temperature at which the core material melts. Since the cladding has a higher melting point than the core material, the cladding does not melt.

Next, in the third step S123, an optical fiber light emitter whose core is made of a crystal of a halide is formed by cooling and solidifying the molten core material to form a crystal of a halide. The crystal of the halide emits light by being irradiated with radiation. The crystal of the halide has a higher refractive index than that of the cladding material. The crystal of the halide is, for example, a crystal of Tl:CsI, Eu:SrI$_2$, CeBr$_3$, Ce:LaBr$_3$, Ce:LaCl$_3$, CaI$_2$, or BaCl$_2$.

After the core material is accommodated in the cladding, the melting and solidification of the core material described above can be carried out in the atmosphere if the cladding is sealed so that the accommodated core material does not come into contact with the outside air.

The core is surrounded by the cladding at the time when the core material is melted and crystallized to form the core, and therefore the core does not come into contact with the surrounding atmosphere, and problems such as deliquescence do not occur. As a matter of course, the core material can be easily accommodated in the cladding in an atmosphere having a humidity of 0. As described above, in accordance with Embodiment 3, an optical fiber light emitter whose core is made of a crystal of a halide can be manufactured extremely easily.

The shape of the core may be an amorphous columnar shape such as a cylindrical shape or a polygonal columnar shape, and a plurality of cores may be arranged in parallel in the cladding to form a shape of a bundle.

Since the core material has a melting point lower than that of the cladding material, it is possible to improve the crystal quality of the core material and improve the performance of the light emitter including the light emission amount, the fluorescence lifetime, and the energy resolution by melting and crystallizing the core material to form the core, and then melting and solidifying the core material in the cladding again, and recrystallizing it.

As described above, in accordance with Embodiment 2 and Embodiment 3, the melt of the halide accommodated in the cladding is cooled and solidified to form a crystal of the halide, thereby forming an optical fiber light emitter having the crystal of the halide as the core. Therefore, an optical fiber light emitter whose core is made of a crystal of a halide can be manufactured more easily.

Embodiment 4

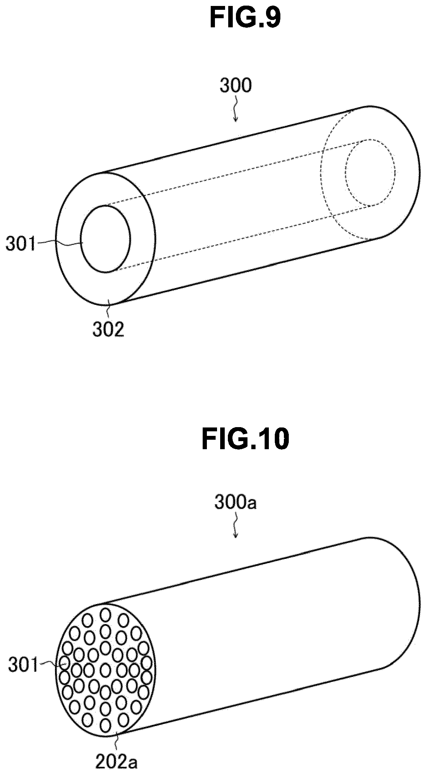

Next, an optical fiber light emitter 300 according to Embodiment 4 of the present invention will be described with reference to FIG. 9. In the above-described optical fiber emitter, when the thermal expansion coefficient difference between the core and the cladding is large, cracks and voids are formed in the internal crystals due to reasons such as a temperature change, and the scintillator performance deterioration such as a decrease in transmittance and a decrease in the light emission amount occurs. As a result, the performance as a radiation detector deteriorates. Moreover, the cladding expands and cracks, and therefore the optical fiber emitter is damaged. Cracks may be formed in the cladding also when the thermal conductivity of the core is large with respect to that of the cladding. For example, it is considered that cracks are formed in the manufacturing process of the optical fiber emitter because cooling proceeds preferentially from the core, which has a fiber-like shape, and the thermal strain increases between the cladding and the core.

The optical fiber light emitter 300 according to Embodiment 4 solves the above-described problems, and includes a core 301 constituted by a scintillator and a cladding 302. The core 301 and the cladding 302 are in at least one of a state where a thermal expansion coefficient difference is within $60 \times 10^{-6}$/ K, and a state where a thermal conductivity difference is within 30 W/m/K. The core 301 may be constituted by a halide crystal that emits light by being irradiated with radiation.

For example, the optical fiber light emitter described above may be manufactured by accommodating the core material in a cylindrical container constituted by a cladding material and heating and stretching the container accommodating the core material with a heater. By heating and stretching in this way, the core material accommodated in the container melts and crystallizes to form an optical fiber light emitter.

The results of actual production will be explained now. A borosilicate glass tube (cylindrical container) having an outer diameter of 20 mm and an inner diameter of 16 mm was filled with the raw materials of each core material listed in Table 1 below. The silicate glass tube filled with the core material was further filled with argon gas. The silicate glass tube turns out to be a cladding material. Thereafter, the temperature in the furnace was locally raised to the softening point of the borosilicate glass (780°C) with a heater, and the borosilicate glass tube filled with the core material was stretched.

[Table 1]

| | | COEFFICIENT OF LINEAR EXPANSION $\times 10^{-6}$/K | THERMAL CONDUCTIVITY W/ $m^{-1}$/ $K^{-1}$ | SOFTENING POINT °C | MELTING POINT | BOILING POINT | REFRACTIVE INDEX |
|---|---|---|---|---|---|---|---|
| CLADDING MATERIAL | LEAD GLASS, PHOSPHATE-BASED GLASS, TELLURIDE-BASED GLASS, VANADATE-BASED GLASS | 8~10 | ~0.75 | 250~ 500 | - | - | 1.6-1. 7 |
| | SODA LIME GLASS | 8~10 | ~0.75 | 550~ 730 | - | - | 1.4-1.5 |
| | BOROSILICATE GLASS | 5 | ~1.2 | 780~88 0 | - | - | 1.4-1.5 |
| | QUARTZ | 7 | ~1.9 | 1600~1 700 | - | - | 1.4-1.5 |
| CORE MATERIAL | TI:Csl | 54 | 1.1 | - | 621 | 1280 | 1.79 |
| | TI:Nal | 47 | 3.47 | - | 661 | 1304 | 1.78 |
| | Ce:LaBr3 | 8 | ~7 | - | 783 | 1577 | 2 |
| | CeBr3 | 17 | 5.66 | - | 722 | 1457 | 2.09 |
| | Eu:Srl2 | 21 | ~7 | - | 402 | 1773 | 1.85 |
| | Na | 70 | 134 | - | 98 | 882 | - |
| | Pb | 29 | 35 | - | | 1749 | - |
| | Cr:Al2O3 | 5.5 | 32 | - | 2040 | 2977 | 1.75 |
| | Tb:GdAlO3/Al2O3 EUTECTIC | - | - | - | 1700 | - | 1.9/1.7 5 |

As a result, optical fiber light emitters including a core and a cladding, formed to have an inner diameter of 80 $\mu$m, could be manufactured for TlCsI, Tl: NaI, Ce:LaBr$_3$, CeBr$_3$, and Eu: SrI$_2$. Optical fiber light emitters having an outer diameter of 100 $\mu$m, an inner diameter of 80 $\mu$m, and a total length of 3,000 m could be manufactured without defects such as cracks. Furthermore, UV excitation or radiation excitation generated scintillator light, and the phenomenon of light being guided in the core was confirmed, and it was found that the light emitter functions as an optical fiber emitter. Cr:Al$_2$O$_3$ did not melt under the above-described condition in which the silicate glass tube was used as a cladding material, and it was not possible to mold an optical fiber emitter. In a comparative example using Pb and Na, the borosilicate glass tube was cracked and it was not possible to mold the optical fiber emitter.

As a comparative example, quartz glass having an outer diameter of 20 mm and an inner diameter of 16 mm was used as a cladding material, the raw material of Cr:Al$_2$O$_3$ was filled in the quartz glass, and argon gas was filled in the quartz glass tube. Their temperature was locally raised to the softening point (1700°C) of the quartz glass with a heater, and stretching was carried out. As a result, the quartz glass and the raw material of Cr:Al$_2$O$_3$ reacted during the temperature rising process, and compounds were produced as a result of the reaction of the quartz glass tube and Cr:Al$_2$O$_3$, which lead to damaging the quartz glass tube. Therefore, it was not possible to mold the optical fiber light emitter. Materials such as oxides that react at the softening point of the glass material or lower were not suitable as the core material.

Moreover, quartz glass having an outer diameter of 20 mm and an inner diameter of 16 mm was used as the cladding material, the raw material of Tb:GdAlO$_3$/Al$_2$O$_3$ eutectic was filled in the quartz glass tube, and the quartz glass tube was filled with argon gas. Their temperature was locally raised with a heater to about 1700°C, which is a melting point of the Tb:GdAlO$_3$/Al$_2$O$_3$ eutectic and a softening point of the quartz glass, and the stretching was carried out. As a result, in the temperature rising process, quartz glass and the raw materials of Tb:GdAlO$_3$/Al$_2$O$_3$ reacted, which lead to damaging the quartz glass tube, and it was not possible to mold the optical fiber emitter. An oxide eutectic that reacts at the softening point of the glass material or lower was also not suitable as the core material.

Meanwhile, it is desirable that the core has a crystalline body transparent to scintillator light. For this reason, it is more desirable that the scintillator constituting the core includes 100 grains/mm$^2$ or greater, or more preferably 2 grains/mm$^2$ or greater. This is because when the scintillator light generated by UV excitation or radiation excitation is guided in the core, the light is attenuated by scattering and absorption at the grain boundary surface, deteriorating the performance as a radiation detector.

The results of the actual production will be described below. A borosilicate glass tube (cylindrical container) having an outer diameter of 20 mm and an inner diameter of 16 mm was filled with a raw material of LaBr$_3$:Ce (melting point: 783°C, refractive index: 1.9) as the core material, and the glass tube was filled with argon gas. The temperature was locally raised to the softening point (830°C) of the borosilicate glass or greater with a heater, and stretching was carried out. As a result, it was able to manufacture an optical fiber light emitter in which a core constituted by a Cs$_2$LiYCl$_6$:Ce scintillator is formed within an inner diameter of 160 $\mu$m. It was able to manufacture an optical fiber light emitter having an outer diameter of 200 $\mu$m, an inner diameter of 160 $\mu$m, and a total length of 1,000 m, without defects such as cracks. Light emission peaking at 370 nm was confirmed when the light emission spectrum was measured by X-ray excitation. It was found that the optical fiber emitter functions as an optical fiber emitter by confirming the phenomenon that the scintillator light is generated by UV excitation or radiation excitation and the light is guided in the core.

The optical fiber emitter obtained above was cut to a length of 10 mm, the end face was mirror polished, and the end face was optically bonded to a photomultiplier tube. In this situation, the light emission amount was measured by a pulse counting technique by irradiating 662 keV $\gamma$-rays from a $^{137}$Cs source to the optical fiber emitter, inputting the signals from the photomultiplier tube to a preamplifier and a wave-shaping amplifier, and then inputting the signals to a multi-channel analyzer. As a result, the wave height spectrum was successfully acquired, and a photoelectric absorption peak corresponding to $\gamma$-rays of 662 keV was confirmed, and the light emission amount of 40,000 photon/MeV was obtained. When the core on an end face of the optical fiber emitter, which supposedly has an inner diameter of 160 $\mu$m, was observed by EBSD, the LaBr$_3$:Ce crystals were densely filled inside the cladding, and six grains were confirmed inside.

Furthermore, the optical fiber emitter having a total length of 1,000 m obtained above was cut to a length of 10 mm. Thereafter, the optical fiber emitter was heated to a melting point of LaBr$_3$:Ce or higher, the core was melted, and the optical fiber emitter was recrystallized by being unidirectionally solidified along the longitudinal direction of the fiber at a rate of 0.1 mm/min. The core of the end face of the optical fiber emitter, which supposedly has an inner diameter of 160 $\mu$m, was observed by EBSD, and it was confirmed that the LaBr$_3$:Ce crystals were densely filled inside the cladding, and one grain was confirmed inside and it was a single crystal. Thereafter, the end face was mirror polished, the end face was optically bonded to a photomultiplier tube, and 662 keV $\gamma$-rays from a $^{137}$Cs source were irradiated to measure the light emission amount according to the pulse counting technique. As a result, the wave height spectrum was successfully acquired, and a photoelectric absorption peak corresponding to $\gamma$-rays of 662 keV was confirmed, obtaining the light emission amount of 6,000 photon/MeV.

Furthermore, as a comparative example, a powder obtained by grinding a LaBr$_3$:Ce scintillator was filled in a 10 mm hollow borosilicate glass tube having an outer diameter of 200 μm and an inner diameter of 160 μm as the core material. Thereafter, the end face was optically bonded to the photomultiplier tube and irradiated with 662 keV γ rays from a $^{137}$Cs source. The light emission amount was measured according to the pulse counting technique but a clear photoelectric absorption peak could not be confirmed, and therefore it was not possible to detect a light emission amount. The core at the end face of the optical fiber emitter, which supposedly has an inner diameter of 160 μm, was observed by SEM, and 80 crystal grains were confirmed inside and voids were confirmed around the grains.

From the above results, it is possible to reduce the number of crystal grains, and ideally form a single crystal, by melting and recrystallizing only the inner core of the provided optical fiber emitter. The optical fiber emitter whose core is a single crystal emitted more light. It was found that the scintillator characteristics can be improved by recrystallizing the core of the optical fiber emitter. Meanwhile, it can be considered that the light emission amount could not be detected when the core is made of a powder instead of a crystalline body. This is because, upon guiding the scintillator light generated by UV excitation or radiation excitation, the light was attenuated because of the scatter and the absorption caused by the presence of crystal grains and voids, and therefore it was not possible to detect a clear photoelectric absorption peak and could not detect a light emission amount.

Since the first ratio of the outer diameter to the inner diameter of the glass tube used for the manufacture turns out to be the ratio of the thickness of the core to the cladding of the optical fiber emitter, the ratio of the thickness of the core to that of the cladding can be optimized according to the purpose of the radiation detector, the radiation energy to be detected, and the characteristics of the particles, by changing the specifications of the glass tube and stretching it. The diameter of the core can be optimized from 0.1 μm to 5 mm. The ratio of the diameter of the core 301 to the thickness of the cladding 302 may be in the range of 10,000:1 to 1:10,000. Since the cladding turns out to be an area insensitive to radiation, the wider the core, the better the sensitivity as a radiation detector.

Meanwhile, as shown in FIG. 10, the optical fiber emitter 300a may be a multi-core fiber having a plurality of cores 301 in the same fiber body (cladding 302a). It can be a bundle of light emitters in which a plurality of optical fiber light emitters 105 are bundled.

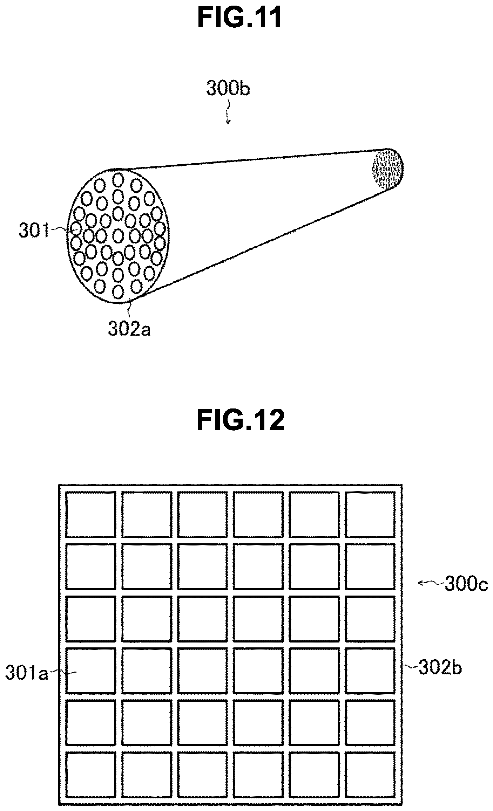

As shown in FIG. 11, in the case of forming a multi-core fiber, the fiber may be an optical fiber light emitter 300b having a configuration where the diameter of the core 301, the thickness of the cladding 302, and the outer diameter get smaller when approaching from one end side to the other end side. For example, in a situation where each pixel of the two-dimensional image sensor corresponds to each core 301, a two-dimensional image sensor is arranged on one end side of the optical fiber emitter 300b. In this situation, the other end side is placed near the object to be observed.

The pitch of each pixel of the two-dimensional image sensor is generally about 10 μm. If the optical fiber emitter 300b is manufactured on one end side of the optical fiber emitter 300b with the pitch of each core 301 set to 10 μm, it is possible to correspond each pixel of the two-dimensional image sensor to each core 301 on the one end side.

Meanwhile, the other end of the optical fiber emitter 300b may have the pitch of each core 301 of 1 μm, for example. When the other end of the optical fiber emitter 300b thus manufactured is disposed in the vicinity of the object to be observed, the radiation generated at the object to be observed is incident on the other end of the optical fiber emitter 300b. At the other end of the optical fiber emitter 300b on which radiation is incident, light corresponding to the intensity of the incident radiation is emitted for each of the plurality of cores 301. The emitted light is guided by the optical fiber emitter 300b to reach one end of the optical fiber emitter 300b. The emitted light reaching the one end of the optical fiber emitter 300b is received by each pixel of the two-dimensional image sensor.

For example, the number of pixels of the two-dimensional image sensor is 1,000 × 1,000, and the optical fiber emitter 300b is formed by a multi-core fiber constituted by 1,000 × 1,000 cores 301. At the other end of the optical fiber emitter 300b, a radiographic image showing the intensity distribution of the generated radiation is received with 1,000 × 1,000 pixels with the pitch of 1 μm, but this radiographic image reaches the one end side of the optical fiber emitter 300b, and thereby forming 1,000 × 1,000 pixels with a pitch of 10 μm, and the image is taken by the two-dimensional image sensor.

As described above, by using the optical fiber emitter 300b, the radiation image having a resolution of 1 μm pitch and received at the other end can be expanded onto the light receiving region of the two-dimensional image sensor having a pixel pitch of 10 μm. The reverse is also possible.

As shown in FIG. 12, a plurality of cores 301a having a rectangular cross-sectional view and a cladding 302b may be used for the optical fiber emitter 300c. The optical fiber emitter 300c is formed by a multi-core fiber. The plurality of cores 301a are arranged in a rectangular manner in the cross-section direction.

In general, in a two-dimensional image sensor, each pixel has a rectangular shape in a plan view, and each pixel is arranged in a rectangular manner. By using the optical fiber emitter 300c for a two-dimensional image sensor having such a light-receiving surface, it is possible to match the geometric correspondence between each pixel of the two-dimensional image sensor and the end face of each core 301a of the optical fiber emitter 300c. As a result, the light (optical image) exited from one end side of the optical fiber emitter 300c can be received by the two-dimensional image sensor with high light detection efficiency. Moreover, since the cladding 302b is located in a region insensitive to radiation, the wider the core 301a, the better the sensitivity.

Embodiment 5

Next, the optical fiber emitter according to Embodiment 5 of the present invention will be described. This optical fiber emitter includes a core constituted by a scintillator, and a cladding, and the core includes a eutectic having two crystalline phases. In the eutectic constituting the core, at least one crystalline phase emits light by being irradiated with radiation.

By using a eutectic, the melting point is lower than that of a single crystalline body such as a single crystal, cracks and voids are less likely to occur, and fiber bending is allowed, and therefore it is possible to improve ease of mass production and the handling upon practical use. It should be noted that the core and the cladding may be in at least one of a state in which the thermal expansion coefficient difference is within $60 \times 10^{-6}$/K, and a state in which the thermal conductivity difference is within 30 W/m/K.

The refractive index difference between the two crystalline phases of the eutectic constituting the core may be 0.1 or less at the emitting wavelength. By reducing the refractive index difference among the crystalline phases of the eutectic constituting the core to preferably 0.1 or less, or more preferably, 0.05 or less, or even more preferably, 0.02 or less, the light emitted by radiation excitation is guided in the core without being attenuated. As a result, in accordance with Embodiment 5, the transparency at the emitting wavelength is high, and therefore the attenuation of the waveguide light can be reduced even if the optical fiber emitter is lengthened.

The average particle size of the two crystalline phases of the eutectic constituting the core may be sufficiently close to the emitting wavelength. The average particle size of the two crystalline phases of the eutectic constituting the core may respectively be preferably 30 $\mu$m or less. More preferably, the average particle size of the two crystalline phases of the eutectic constituting the core can be reduced to 5 $\mu$m or less, or even more preferably, 0.5 $\mu$m or less. In this way, the light emitted by the radiation excitation is guided in the core without attenuation. It is possible to reduce the scattering of light at the grain boundaries, reduce the attenuation of light passing through the core, and enhance the straightness of light. As a result, in accordance with Embodiment 5, the transparency at the emitting wavelength is high, and therefore the attenuation of the waveguide light can be reduced even if the optical fiber emitter is lengthened.

In a eutectic, it is known that the grain size $\lambda$ and the solidification rate v of the crystalline phase have a relationship expressed by: $\lambda^2 \propto \sigma^{\alpha/\beta} \cdot D_{(A-B)}^{L}/v$, where $\sigma^{\alpha/\beta}$ is interfacial energy, and $D_{(A-B)}^{L}$ is an interdiffusion coefficient. The interfacial energy and the interdiffusion coefficient are values intrinsic to the chemical composition of the eutectic, and the square of the grain size of the crystalline phase is inversely proportional to the solidification rate. That is, the larger the solidification rate, the smaller the particle size of the crystalline phase.

The crystalline phase preferably contains 0.001 mol% or greater of a rare earth element constituted by at least one of Pr, Ce, Nd, Sm, Eu, Gd, Tb, Dy, Ho, Dy, Er, Tm, Yb, Tl, Pb, Bi, Ag, Ti, and Cr as the light emitting center, with respect to the total material in the crystalline phase of the core. The crystalline phase includes a halide represented by a chemical formula $A_xB_yC_zX_{x+2y+3z}$ ($0 \leq x < 1, 0 < y \leq 1, 0 < z \leq 1$), where A is an element including at least one of Li, Na, K, Rb, Cs, and Cd, B is an element including at least one of Zn, Be, Mg, Ca, Sr, and Ba, C is an element including at least one of Y, Ce, La, Gd, Lu, Bi, Ga, Al, Hf, and Zr, and X is an element including at least one of F, Cl, Br, I, Tl, Se, O, P, and S.

[Table 2]

| CRYSTALLINE PHASE 1 | CRYSTALLINE PHASE 2 | REFLACTIVE INDEX DIFFERENCE | LIGHT EMITTING CENTER | LIGHT EMITTING WAVELENGTH (nm) |
|---|---|---|---|---|
| NaI | CsI | 0.02 | $Tl^+$ | 420,550 |
| NaI | CsI | 0.02 | $Na^+$ | 420 |
| NaI | CsI | 0.02 | $Tb^{3+}$ | 550 |
| NaI | CsI | 0.02 | $EU^{3+}$ | 615 |
| CaI2 | LaBr3 | 0.02 | $Ce^{3+}$ | 370 |
| CaI2 | LaBr3 | 0.02 | HOST LIGHT EMISSION | 400 |
| CaI2 | LaBr3 | 0.02 | $Eu^{2+}$ | 460 |
| CaI2 | LaBr3 | 0.02 | $Tb^{3+}$ | 550 |
| Cs2LiYCl6 | YCl3 | 0.03 | $Ce^{3+}$ | 370 |
| Cs2LiYCl6 | YCl3 | 0.03 | $Tb^{3+}$ | 550 |

(continued)

| CRYSTALLINE PHASE 1 | CRYSTALLINE PHASE 2 | REFLACTIVE INDEX DIFFERENCE | LIGHT EMITTING CENTER | LIGHT EMITTING WAVELENGTH (nm) |
|---|---|---|---|---|
| La Br3 | BaCl2 | 0.04 | $Ce^{3+}$ | 370 |
| La Br3 | BaCl2 | 0.04 | $Eu^{2+}$ | 400,615 |

[Table 3]

| CRYSTALLINE PHASE 1 | CRYSTALLINE PHASE 2 | REFLACTIVE INDEX DIFFERENCE | LIGHT EMITTING CENTER | LIGHT EMITTING WAVELENGTH (nm) |
|---|---|---|---|---|
| CeBr3 | BaCl2 | 0.04 | $Ce^{3+}$ | 370 |
| CaI2 | CsCaI3 | 0.04 | HOST LIGHT EMISSION | 400 |
| CaI2 | CsCaI3 | 0.04 | $Eu^{2+}$ | 450,460 |
| LiBr | CsI | 0.02 | $Tl^{+}$ | 550 |
| LiBr | NaI | 0.02 | $Tl^{+}$ | 420 |
| CsI | NaI | 0.02 | $Tl^{+}$ | 420,550 |
| CsHfCl5 | CsCl | 0.02 | HOST LIGHT EMISSION | 400 |
| LaBr3 | LiI | 0.03 | $Ce^{3+}$ | 370 |
| LaBr3 | BaI2 | 0.04 | $Ce^{3+}$ | 370 |
| LaBr3 | BaI2 | 0.04 | $Eu^{2+,}$ $Eu^{3+}$ | 420,615 |

[Table 4]

| CRYSTALLINE PHASE 1 | CRYSTALLINE PHASE 2 | REFLACTIVE INDEX DIFFERENCE | LIGHT EMITTING CENTER | LIGHT EMITTING WAVELENGTH (nm) |
|---|---|---|---|---|
| LaBr3 | SrI2 | 0.03 | $Ce^{3+}$ | 370 |
| LaBr3 | SrI2 | 0.03 | $Eu^{2+,}$ $Eu^{3+}$ | 420,615 |
| CeBr3 | LiI | 0.04 | $Ce^{3+}$ | 370 |
| CeBr3 | BaI2 | 0.03 | $Ce^{3+}$ | 370 |
| CeBr3 | BaI2 | 0.03 | $Eu^{2+,}$ $Eu^{3+}$ | 420,615 |
| CeBr3 | SrI2 | 0.04 | $Ce^{3+}$ | 370 |
| CeBr3 | SrI2 | 0.04 | $Eu^{2+,}$ $Eu^{3+}$ | 420,615 |
| BaBr2 | CaI2 | 0.04 | $Eu^{2+}$ | 410,460 |
| BaBr2 | CaI2 | 0.04 | HOST LIGHT EMISSION | 400 |

The results of the actual production will be described below. A borosilicate glass tube (cylindrical container) having an outer diameter of 10 mm and an inner diameter of 8 mm was filled with a raw material of a eutectic (melting point 428°C) constituted by NaI and CsI as the core material with Tl acting as the light emitting center, and the glass tube was filled with argon gas. The temperature was locally raised to the softening point (780°C) of the borosilicate glass with a heater, and stretching was carried out at a rate of 0.1 m/min. As a result, it was able to manufacture an optical fiber light emitter whose core constituted by a NaI/CsI:Tl eutectic scintillator is formed to have an inner diameter of 160 μm. An optical fiber light emitter having an outer diameter of 200 μm, an inner diameter of 160 μm, and a total length of 1,000 m could be manufactured without defects such as cracks. In this optical fiber emitter, each crystalline phase of NaI:Tl and CsI:Tl generated scintillator light as a result of UV excitation or radiation excitation, and the phenomenon of light being guided in the core was observed, and it was found that the optical fiber emitter functioned as an optical fiber emitter.

The obtained optical fiber emitter was cut to a length of 10 mm, the end face was mirror polished, and the end face was optically bonded to the photomultiplier tube. In this situation, 662 keV γ-rays from a $^{137}$Cs source were irradiated onto the optical fiber emitter, and the light emission amount was measured according to the pulse counting technique. As a result, the wave height spectrum was successfully acquired, and the photoelectric absorption peak corresponding to γ-rays of 662 keV was confirmed, and the light emission amount of 25,000 photon/MeV was obtained. The core on the end face of the optical fiber emitter having an inner diameter of 160 μm was observed by an electron microscope, and the average particle size of each crystalline phase of NaI:Tl and CsI:Tl was 15 μm.

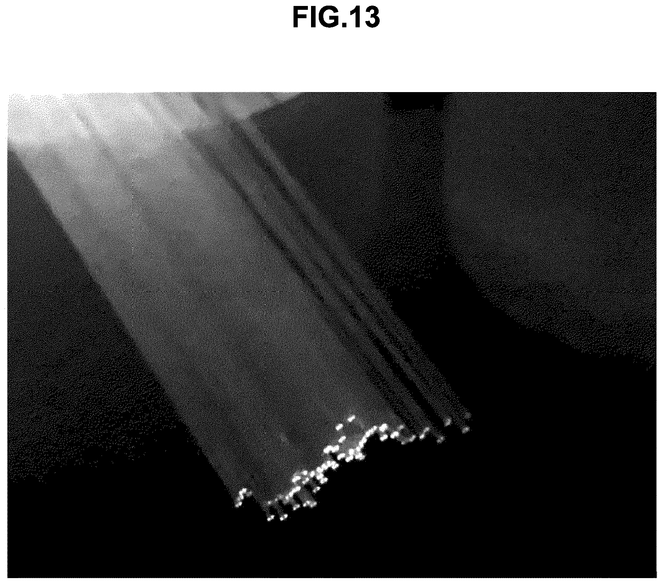

A borosilicate glass tube (cylindrical container) having an outer diameter of 20 mm and an inner diameter of 16 mm was filled with a raw material of a eutectic (melting point 428°C) constituted by NaI and CsI as the core material, with Tl acting as the light-emitting center, and the glass tube was filled with argon gas. The temperature was locally raised to the softening point (780°C) of the borosilicate glass with a heater, and stretching was carried out at a rate of 1 m/min. As a result, it was able to manufacture an optical fiber light emitter whose core constituted by a NaI/CsI:Tl eutectic scintillator is formed to have an inner diameter of 160 μm. An optical fiber light emitter having an outer diameter of 200 μm, an inner diameter of 160 μm, and a total length of 1,000 m could be manufactured without defects such as cracks. It was found that this optical fiber emitter functions as an optical fiber emitter by confirming the phenomenon of each crystalline phase of NaI:Tl and CsI:Tl generating scintillator light with UV excitation or radiation excitation and the light being guided in the core (FIG. 13).

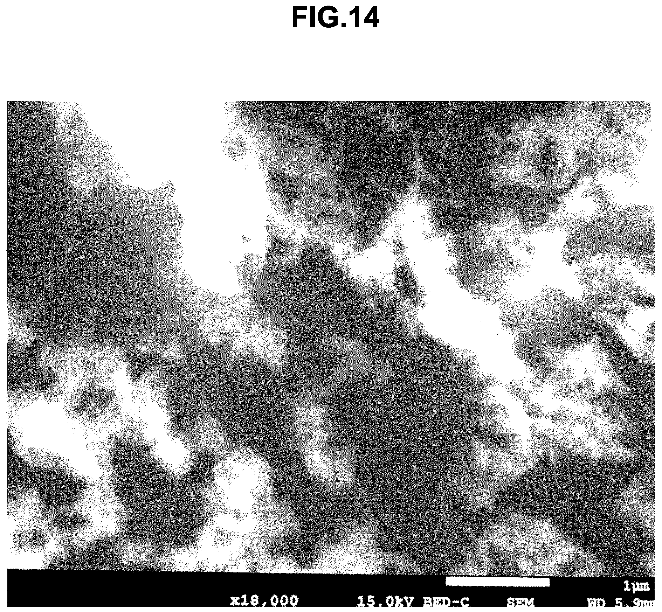

The obtained optical fiber emitter was cut to a length of 10 mm, the end face was mirror polished, and the end face was optically bonded to the photomultiplier tube. In this situation, 662 keV γ-rays from a $^{137}$Cs source were irradiated onto the optical fiber emitter, and the light emission amount was measured according to the pulse counting technique. As a result, the wave height spectrum was successfully acquired, and the photoelectric absorption peak corresponding to γ-rays of 662 keV was confirmed, and the light emission amount of 33,000 photon/MeV was obtained. The core on the end face of the optical fiber emitter, which supposedly has an inner diameter of 160 μm, was observed by an electron microscope, and the average particle size of each crystalline phase of NaI:Tl and CsI:Tl was 0.3 μm. FIG. 14 shows a reflection electron image obtained by observing the core. FIG. 14 shows a eutectic in which the black parts are NaI and the white parts are CsI.

In the production of a eutectic core, the solidification rate of the molten core can be increased by increasing the stretching rate. As a result, the average particle size of each crystalline phase tended to be smaller. The emission peak wavelength of CsI:Tl was 0.55 nm. However, an optical fiber emitter whose core is a NaI/CsI:Tl eutectic, having an average particle size of 0.3 μm, emitted more light than an optical fiber emitter whose core is a NaI/CsI:Tl eutectic, having an average particle size of 15 μm. By sufficiently reducing the average particle size with respect to the emitting wavelength of the scintillator core, it was possible to reduce the scattering of light at the crystal grain boundary, reduce attenuation of light passing through the core, and improve the straightness of the light. Therefore, the light emission amount of the optical fiber emitter has increased.

Translucency inside the core with respect to the scintillator light generated inside the optical fiber emitter can be evaluated by using linear transmittance T indicated by:

$$T = e^{-\gamma t} \quad \text{... Equation (1)},$$

where γ is the attenuation coefficient of light, and t is thickness of the core. γ is the sum of the sample-specific absorption coefficient and the scattering terms, but taking the latter into consideration is sufficient for a core that does not absorb light at the wavelength of scintillator light. The main scattering of light in the core in the optical fiber emitter is intergranular scattering ($\gamma_g$) as a result of the difference in the refractive index of each crystalline phase of the eutectic, and scattering ($\gamma_p$) as a result of vacancies in the grain boundary ($\gamma = \gamma_g + \gamma_p$).

Each scattering is formulated on the basis of optical theories. According to the formulation based on the Rayleigh-Gan's-Debye model, $\gamma_g$ is expressed as:

$$\gamma_g = 3\pi^2 d_g \Delta n_g^2 / \lambda^2 \quad \text{... Equation (2)}.$$

$\gamma_p$ is expressed as:

$$\gamma_p = 6p\pi^2 d_p \Delta n_p^2 / \lambda^2 \ ... \ \text{Equation (3)},$$

where $\lambda$ is the wavelength of light, p is the vacancy ratio, $d_g$ is an average grain size of the crystalline phase, $d_p$ is a diameter of the vacancy, and $\Delta n_g$ is a difference between the maximum refractive index n1 of the crystalline phase including birefringence and the average value n2 of the refractive index ($\Delta n_g$ = n1 - n2). $\Delta n_p$ is the difference between the average refractive index n1 of the crystal and the refractive index $n_p$ of the substance filling the vacancy, but since the latter typically assumes air (refractive index 1), $\Delta n_p$ = n1 - 1.

From Equation (2), if the refractive index difference among the crystalline phases of the eutectic is sufficiently small, $\Delta n_g$ approaches 0, and $\gamma_g$ approaches 0, and therefore the influence of grain boundaries to the scattering disappears. That is, the linear transmittance T in Equation (1) approaches 1, and therefore a high linear transmittance can be achieved. In the case of a core constituted by a eutectic without vacancies, the closer $\gamma_p$ approaches 0 and the smaller the average particle size $d_g$ of the crystalline phase, the smaller $\gamma_p$ will be, and there will be no attenuation caused by light scattering inside the core. Such a core is a eutectic core, which contains multiple crystalline phases but has a translucency not less than that of a single crystal or glass.

From these results, if the refractive index difference among different crystalline phases is sufficiently small, the light propagates through the eutectic with sufficient straightness, and therefore the probability of total reflection at a critical angle or above at the cladding interface increases, and it is possible to achieve a light guidance similar to those of general optical fibers. Meanwhile, when the refractive index difference among different crystalline phases is larger than 0.1, the straightness of the light deteriorates as a result of the scattering of light in the crystalline phase with a larger refractive index and the scattering of light at the crystal boundary. Therefore, the probability of the light penetrating into the glass cladding within the critical angle increases, which leads to deteriorating the optical waveguiding performance.

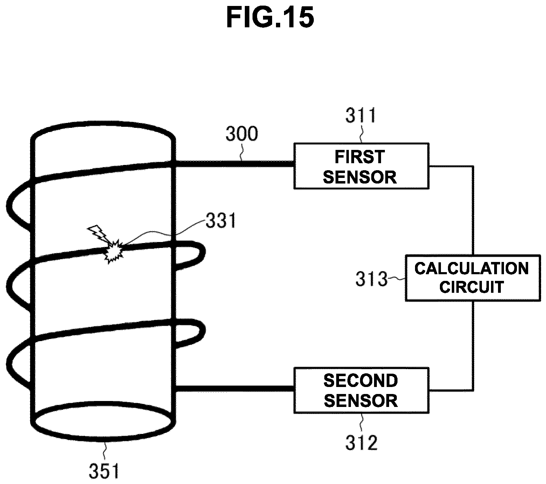

Next, a radiation measuring device according to an embodiment of the present invention will be described with reference to FIG. 15. The radiation measuring device includes an optical fiber light emitter 300, a first sensor 311, a second sensor 312, and a calculation circuit 313.

The optical fiber light emitter 300 is an optical fiber light emitter described in each of the above-described embodiments, and includes a core constituted by a scintillator that emits light by being irradiated with radiation, and a cladding. The first sensor 311 detects light reaching one end side of the optical fiber emitter 300. The second sensor 312 detects light reaching the other end side of the optical fiber emitter 300.

The calculation circuit 313 obtains the incident position 331 of the radiation in the optical fiber emitter 300 from at least one of the difference in the light detection time and the difference in the amount of the detected light, between the first sensor 311 and the second sensor 312. The calculation circuit 313 is a computer device including devices such as a central processing unit (CPU), a main memory, and an external storage device, and the CPU operates (executes the program) by a program deployed in the main memory. By doing so, each of the above functions can be realized.

For example, the optical fiber emitter 300 can be formed in a coil shape. The optical fiber light emitter 300 formed in a coil shape can be wound around a measuring target 351, such as a reactor and an accelerator, which generates radiation.

For example, we will consider a case where the position where the radiation is incident is 150 m from one end and 30 m from the other end of the optical fiber emitter 300. In this case, the first sensor 311 detects light about 500 ns after the radiation is incident. Meanwhile, the second sensor 312 detects light about 100 ns after the radiation is incident. For the calculation, the speed of light is 30 cm/ns. The amount of photons measured by the first sensor 311 is 9,000 photons, and the amount of photons measured by the second sensor 312 is 10,000 photons.

In the calculation circuit 313, the position on the optical fiber emitter 300 at which the radiation is incident is obtained on the basis of the difference of 400 ns between the light detection times described above and the difference of 1,000 photons between the light amounts. Moreover, by using the optical fiber emitter 300 formed in a coil shape, the position at which the radiation is incident can be identified in three dimensions.

As described above, in accordance with Embodiment 4, the core and the cladding are in at least one of a state where the thermal expansion coefficient difference is within $60 \times 10^{-6}$/K and a state where the thermal conductivity difference is within 30 W/m/K. Therefore, it is possible to reduce breakage of the optical fiber light emitter caused by temperature change.

In accordance with Embodiment 5, since the core is configured by a eutectic including two crystalline phases, it is possible to improve mass productivity and improve ease of handling during practical use. Compared to a single crystalline body such as a single crystal, eutectic has a lower melting point, which makes cracks and voids less likely to occur, and allows fiber bending furthermore.

As described above, according to the present invention, a cylindrical container constituted by a thermoplastic material accommodates a halide having a melting point lower than the thermoplastic material, and the resultant is heated and stretched. Therefore, it becomes easier to manufacture an optical fiber light emitter whose core is made of a crystal of a halide.

A part or all of the above embodiments are also described as in the following appendixes, but are not limited to the following.

[Appendix 1]

A method for manufacturing an optical fiber emitter, the method including the steps of: a first step of accommodating a core material constituted by a halide having a melting point lower than that of the cladding material in a cylindrical container constituted by a thermoplastic cladding material; and a second step of forming an optical fiber light emitter comprising a core constituted by a crystal of the halide, and a cladding constituted by the cladding material, by heating the container accommodating the core material and stretching the container, wherein the crystal of the halide emits light by being irradiated with radiation.

[Appendix 2]

A method for manufacturing an optical fiber emitter, the method including the steps of: a first step of preparing a cylindrical cladding; a second step of forming a melt by melting a halide having a melting point lower than that of a material constituting the cladding; a third step of accommodating the melt in the cladding; and a fourth step of forming an optical fiber emitter whose core is made of a crystal of the halide by cooling and solidifying the melt accommodated in the cladding to form the crystal of the halide, wherein the crystal of the halide emits light by being irradiated with radiation.

[Appendix 3]

The method according to Appendix 2, wherein in the third step, the melt is accommodated in the cladding by being sucked up into the inside of the cladding.

[Appendix 4]

The method according to Appendix 2, wherein in the third step, the melt is accommodated in the cladding by being pushed up into the inside of the cladding.

[Appendix 5]

The method according to any one of Appendixes 2-4, wherein in the first step, a cladding array in which a plurality of claddings are bundled is provided, and in the third step, the melt is accommodated in each of the claddings of the cladding array.

[Appendix 6]

A method for manufacturing an optical fiber emitter, the method including the steps of: a first step of accommodating in a cylindrical cladding a core material constituted by a halide having a melting point lower than that of a material constituting the cladding; a second step of melting the core material accommodated in the cladding; and a third step of forming an optical fiber light emitter whose core is made of a crystal of the halide by cooling and solidifying the molten core material to form the crystal of the halide, wherein the crystal of the halide emits light by being irradiated with radiation.

[Appendix 7]

An optical fiber emitter comprising: a core constituted by a halide crystal that emits light; and a cladding constituted by a thermoplastic material.

[Appendix 8]

An optical fiber light emitter comprising: a core constituted by a scintillator; and a cladding, wherein the core and the cladding have a thermal expansion coefficient difference of a value $60 \times 10^{-6}$/K or less and a thermal conductivity difference of a value 30 W/m/K or less.

[Appendix 9]

The optical fiber emitter according to Appendix 7 or 8, wherein the optical fiber emitter is formed of a multi-core fiber having a plurality of the cores in the same fiber body.

[Appendix 10]

The optical fiber emitter according to Appendix 9, wherein diameter of the core, thickness of the cladding, and the outer diameter of the cladding get smaller as approaching from one end side to the other end side.

[Appendix 11]

The optical fiber emitter according to Appendix 9, wherein the core is rectangular in a cross-sectional view and arranged in a rectangular manner in the cross-sectional direction.

[Appendix 12]

An optical fiber emitter comprising: a core constituted by a eutectic having two crystalline phases; and a cladding, wherein at least one of the crystalline phases emits light by being irradiated with radiation.

[Appendix 13]

The optical fiber emitter according to Appendix 12, wherein average crystal grain size of the two crystalline phases is 30 $\mu$m or less.

[Appendix 14]

The optical fiber emitter according to Appendix 12, wherein refractive index difference between the two crystalline phases is 0.1 or less at an emitting wavelength.

[Appendix 15]

The optical fiber emitter according to Appendix 14, wherein average crystal grain size of the two crystalline phases is 30 $\mu$m or less.

[Appendix 16]

The optical fiber emitter according to any one of Appendixes 7-15, wherein the core is constituted by an oxide crystal or a halide crystal that emits light by being irradiated with radiation.

[Appendix 17]

A radiation measuring device comprising the optical fiber emitter according to any one of Appendixes 7-16.

[Appendix 18]

A light emitter bundle in which a plurality of the optical fiber emitters according to any one of Appendixes 7-16 are bundled.

[Appendix 19]

A radiation measuring device comprising the light emitter bundle according to Appendix 18.

[Appendix 20]

A radiation measuring device comprising: an optical fiber light emitter including a core constituted by a scintillator that emits light by being irradiated with radiation, and a cladding; a first sensor for detecting light reaching one end side of the optical fiber emitter; a second sensor for detecting light reaching the other end side of the optical fiber emitter;

and a calculation circuit for obtaining an incident position of radiation in the optical fiber emitter by at least one of a difference in light detection time and a difference in the detected amount of light, between the first sensor and the second sensor.

[Appendix 21]

The radiation measuring device according to Appendix 20, wherein the optical fiber light emitter is formed in a coil shape.

It should be noted that the present invention is not limited to the embodiments described above, and it is apparent that many variations and combinations can be carried out by a person having ordinary skill in the art within the technical idea of the present invention.

Reference Signs List

101: container, 102: core material, 103: core, 104: cladding, 105: optical fiber emitter, 151: heater

**Claims**

1. A method for manufacturing an optical fiber emitter, the method including the steps of:

    a first step of accommodating a core material constituted by a halide having a melting point lower than that of the cladding material in a cylindrical container constituted by a thermoplastic cladding material; and
    a second step of forming an optical fiber light emitter comprising a core constituted by a crystal of the halide, and a cladding constituted by the cladding material, by heating the container accommodating the core material and stretching the container, wherein
    the crystal of the halide emits light by being irradiated with radiation.

2. A method for manufacturing an optical fiber emitter, the method including the steps of:

    a first step of preparing a cylindrical cladding;
    a second step of forming a melt by melting a halide having a melting point lower than that of a material constituting the cladding;
    a third step of accommodating the melt in the cladding; and
    a fourth step of forming an optical fiber emitter whose core is made of a crystal of the halide by cooling and solidifying the melt accommodated in the cladding to form the crystal of the halide, wherein
    the crystal of the halide emits light by being irradiated with radiation.

3. The method according to claim 2, wherein
   in the third step, the melt is accommodated in the cladding by being sucked up into the inside of the cladding.

4. The method according to claim 2, wherein
   in the third step, the melt is accommodated in the cladding by being pushed up into the inside of the cladding.

5. The method according to any one of claims 2-4, wherein

    in the first step, a cladding array in which a plurality of claddings are bundled is provided, and
    in the third step, the melt is accommodated in each of the claddings of the cladding array.

6. A method for manufacturing an optical fiber emitter, the method including the steps of:

    a first step of accommodating in a cylindrical cladding a core material constituted by a halide having a melting point lower than that of a material constituting the cladding;
    a second step of melting the core material accommodated in the cladding; and
    a third step of forming an optical fiber light emitter whose core is made of a crystal of the halide by cooling and solidifying the molten core material to form the crystal of the halide, wherein
    the crystal of the halide emits light by being irradiated with radiation.

7. An optical fiber emitter comprising:

   a core constituted by a halide crystal that emits light; and
   a cladding constituted by a thermoplastic material.

8. An optical fiber light emitter comprising:

   a core constituted by a scintillator; and
   a cladding, wherein
   the core and the cladding have a thermal expansion coefficient difference of a value $60 \times 10^{-6}$/K or less and a thermal conductivity difference of a value 30 W/m/K or less.

9. The optical fiber emitter according to claim 7 or 8, wherein
   the optical fiber emitter is formed of a multi-core fiber having a plurality of the cores in the same fiber body.

10. The optical fiber emitter according to claim 9, wherein
    diameter of the core, thickness of the cladding, and the outer diameter of the cladding get smaller as approaching from one end side to the other end side.

11. The optical fiber emitter according to claim 9, wherein
    the core is rectangular in a cross-sectional view and arranged in a rectangular manner in the cross-sectional direction.

12. An optical fiber emitter comprising:

    a core constituted by a eutectic having two crystalline phases; and
    a cladding, wherein
    at least one of the crystalline phases emits light by being irradiated with radiation.

13. The optical fiber emitter according to claim 12, wherein
    average crystal grain size of the two crystalline phases is 30 $\mu$m or less.

14. The optical fiber emitter according to claim 12, wherein
    refractive index difference between the two crystalline phases is 0.1 or less at an emitting wavelength.

15. The optical fiber emitter according to claim 14, wherein
    average crystal grain size of the two crystalline phases is 30 $\mu$m or less.

16. The optical fiber emitter according to claim 7 or 8, wherein
    the core is constituted by an oxide crystal or a halide crystal that emits light by being irradiated with radiation.

17. A radiation measuring device comprising the optical fiber emitter according to claim 7 or 8.

18. A light emitter bundle in which a plurality of the optical fiber emitters according to claim 7 or 8 are bundled.

19. A radiation measuring device comprising the light emitter bundle according to claim 18.

20. A radiation measuring device comprising:

    an optical fiber light emitter including a core constituted by a scintillator that emits light by being irradiated with radiation, and a cladding;
    a first sensor for detecting light reaching one end side of the optical fiber emitter;
    a second sensor for detecting light reaching the other end side of the optical fiber emitter; and
    a calculation circuit for obtaining an incident position of radiation in the optical fiber emitter by at least one of a difference in light detection time and a difference in the detected amount of light, between the first sensor and the second sensor.

21. The radiation measuring device according to claim 20, wherein
    the optical fiber light emitter is formed in a coil shape.

# FIG.1A

# FIG.1B

# FIG.2

# FIG.3

# FIG.4A

# FIG.4B

# FIG.5

# FIG.6

```
        ┌─────────────┐
        │    START     │
        └──────┬──────┘
               │
        ┌──────┴──────┐
        │ PREPARE A   │──S101
        │  CLADDING   │
        └──────┬──────┘
               │
        ┌──────┴──────┐
        │ MAKE A MELT OF │──S102
        │  A HALIDE   │
        └──────┬──────┘
               │
        ┌──────┴──────┐
        │ ACCOMMODATE THE │──S103
        │  MELT IN THE   │
        │  CLADDING   │
        └──────┬──────┘
               │
        ┌──────┴──────┐
        │ SOLIDIFY THE MELT │──S104
        │ TO FORM A CORE │
        └──────┬──────┘
               │
        ┌──────┴──────┐
        │    END      │
        └─────────────┘
```

# FIG.7A

201

200

# FIG.7B

201~

←~200

~202

# FIG.8

START

ACCOMMODATE A CORE MATERIAL IN A CLADDING —S121

MELT THE CORE MATERIAL —S122

SOLIDIFY THE MOLTEN CORE MATERIAL —S123

END

# FIG.9

# FIG.10

# FIG.11

300b

301

302a

# FIG.12

300c

301a

302b

# FIG.13

# FIG.14

# FIG.15

**EP 4 379 426 A1**

## INTERNATIONAL SEARCH REPORT

| International application No. |
| --- |
| **PCT/JP2022/026525** |

### A. CLASSIFICATION OF SUBJECT MATTER

*G01T 1/00*(2006.01)i; *C09K 11/00*(2006.01)i; *C09K 11/08*(2006.01)i; *C09K 11/61*(2006.01)i; *G01T 1/20*(2006.01)i; *G02B 6/00*(2006.01)i

FI:   G01T1/00 A; C09K11/00 E; C09K11/08 A; C09K11/61; G01T1/20 B; G02B6/00 B

According to International Patent Classification (IPC) or to both national classification and IPC

### B. FIELDS SEARCHED

Minimum documentation searched (classification system followed by classification symbols)

G01T1/00; C09K11/00; C09K11/08; C09K11/61; G01T1/20; G02B6/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

Scopus

### C. DOCUMENTS CONSIDERED TO BE RELEVANT

| Category* | Citation of document, with indication, where appropriate, of the relevant passages | Relevant to claim No. |
| --- | --- | --- |
| X | CN 111913208 A (UNIV SOUTH CHINA TECH) 10 November 2020 (2020-11-10) paragraphs [0036]-[0052], claim 8 | 1, 6-11, 16-19 |
| Y | paragraphs [0036]-[0052] | 2-5 |
| A | entire text, all drawings | 12-15, 20-21 |
| Y | JP 63-143508 A (KOKUSAI DENSHIN DENWA CO LTD <KDD>) 15 June 1988 (1988-06-15) p. 2, upper left column, line 20 to upper right column, line 17, fig. 1 | 2-5 |
| A | entire text, all drawings | 1, 6-21 |
| X | JP 56-100147 A (FUJIKURA LTD) 11 August 1981 (1981-08-11) p. 2, upper left column, line 10 to lower left column, line 3 | 12-15 |
| A | entire text, all drawings | 1-11, 16-21 |

☑ Further documents are listed in the continuation of Box C.　　☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **19 August 2022** | **06 September 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| | International application No. |
|---|---|
| | **PCT/JP2022/026525** |

### C. DOCUMENTS CONSIDERED TO BE RELEVANT

| Category* | Citation of document, with indication, where appropriate, of the relevant passages | Relevant to claim No. |
|---|---|---|
| X | JP 9-80156 A (POWER REACTOR & NUCLEAR FUEL DEV CORP) 28 March 1997 (1997-03-28) paragraphs [0026]-[0037], fig. 3, 4 | 20-21 |
| A | entire text, all drawings | 1-19 |
| A | JP 56-111805 A (FUJIKURA LTD) 03 September 1981 (1981-09-03) entire text, all drawings | 1-21 |

Form PCT/ISA/210 (second sheet) (January 2015)

EP 4 379 426 A1

**INTERNATIONAL SEARCH REPORT**

International application No.

**PCT/JP2022/026525**

**Box No. III      Observations where unity of invention is lacking (Continuation of item 3 of first sheet)**

This International Searching Authority found multiple inventions in this international application, as follows:

Claims are classified into the following three inventions.

(Invention 1) Claims 1-11 and 16-19
Document 1 discloses a "method for manufacturing an optical fiber light-emitting body, the method being characterized by comprising: a first step for accommodating, in a cylindrical container formed from a thermoplastic cladding material, a core material composed of a halide having a lower melting point than the cladding material; and a second step for heating and stretching the container containing the core material to form an optical fiber light-emitting body composed of a core formed from halide crystals and a cladding formed from the cladding material, wherein the halide crystals emit light by irradiation with radiation," and claim 1 lacks novelty in light of document 1, and thus does not have a special technical feature.
Claims 7-11 and 16-19 have a technical feature identical or corresponding to that of claim 1.
Therefore, claims 1, 7-11 and 16-19 are classified as invention 1.

(Invention 2) Claims 12-15
Claims 12-15 cannot be said to have a technical feature identical or corresponding to that of claims 1-11 and 16-19 classified as invention 1.
Furthermore, claims 12-15 are not substantially identical to or similarly closely related to any of the claims classified as invention 1.
Therefore, claims 12-15 cannot be classified as any of invention 1.
In addition, claims 12-15 have the special technical feature of an "optical fiber light-emitting body characterized by comprising: a core composed of a eutectic body having two crystal phases; and a cladding, wherein at least one of the crystal phases emits light by radiation," and are thus classified as invention 2.

(Invention 3) Claims 20-21
Claims 20-21 cannot be said to have technical features identical or corresponding to those of claims 1-19 classified as invention 1 or 2.
Furthermore, claims 20-21 are not substantially identical to or similarly closely related to any of the claims classified as invention 1 or 2.
Therefore, claims 20-21 cannot be classified as either invention 1 or 2.
In addition, claims 20-21 have the special technical feature of a "radiation measurement device comprising: an optical fiber light-emitting body composed of a cladding and a core made of a scintillator that emits light by irradiation with radiation; a first sensor that detects light reaching one end side of the optical fiber light-emitting body; a second sensor that detects light reaching the other end side of the optical fiber light-emitting body; and an arithmetic circuit that determines an incident position of the radiation in the optical fiber light-emitting body by at least one of a difference in time of light detection and a difference in detected light quantity between the first sensor and the second sensor," and are thus classified as invention 3.

Form PCT/ISA/210 (continuation of first sheet) (January 2015)

## INTERNATIONAL SEARCH REPORT

| International application No. |
| --- |
| **PCT/JP2022/026525** |

**Box No. III     Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.

**PCT/JP2022/026525**

| Patent document cited in search report | | | Publication date (day/month/year) | Patent family member(s) | Publication date (day/month/year) |
|---|---|---|---|---|---|
| CN | 111913208 | A | 10 November 2020 | (Family: none) | |
| JP | 63-143508 | A | 15 June 1988 | (Family: none) | |
| JP | 56-100147 | A | 11 August 1981 | (Family: none) | |
| JP | 9-80156 | A | 28 March 1997 | (Family: none) | |
| JP | 56-111805 | A | 03 September 1981 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6868643 B

- JP 6468820 B